# EUROPÄISCHE PATENTSCHRIFT

(11) **EP 2 936 960 B1**
(45) Veröffentlichungstag und Bekanntmachung des Hinweises auf die Patenterteilung: **25.10.2017**
(21) Anmeldenummer: 15001038.7
(22) Anmeldetag: 11.04.2015
(51) Int. Cl.: A01D 34/416

(54) **FADENMÄHKOPF FÜR EINEN FREISCHNEIDER**
STRING MOWER HEAD FOR A STRING MOWER
TÊTE FAUCHEUSE POUR UNE DÉBROUSSAILLEUSE

(30) Priorität: 26.04.2014 DE 102014006057
(43) Veröffentlichungstag der Anmeldung: 28.10.2015
(73) Patentinhaber: Andreas Stihl AG & Co. KG, 71336 Waiblingen (DE)
(72) Erfinder: Günther, David, 71394 Kernen im Remstal (DE); Hauber, Thomas, 73431 Aalen (DE)
(74) Vertreter: Reinhardt, Annette

(56) Entgegenhaltungen:
- EP-B1- 1 446 002
- US-A- 4 065 913
- US-A1- 2004 237 315

## Beschreibung

Die Erfindung betrifft einen Fadenmähkopf für einen Freischneider der im Oberbegriff des Anspruchs 1 angegebenen Gattung.

Aus der EP 1 446 002 B1 ist ein Fadenmähkopf für einen Freischneider bekannt, der einen Grundkörper besitzt, in den von der Außenseite des Fadenmähkopfes von gegenüberliegenden Seiten zwei Schneidfäden eingeschoben werden können. Die Schneidfäden sind am Fadenmähkopf über schwenkbare Klinken gehalten. Die freien Enden der Schneidfäden ragen in einen zur Unterseite des Fadenmähkopfes hin offenen Innenraum. Um die Schneidfäden vom Fadenmähkopf zu entnehmen, beispielsweise zum Austausch, können die innenliegenden freien Enden der Schneidfäden vom Bediener gegriffen und die Schneidfäden nach innen durchgezogen werden.

Es hat sich gezeigt, dass der zur Unterseite des Grundkörpers hin offene Innenbereich des Grundkörpers im Betrieb stark verschmutzen kann. An den freien Enden der Schneidfäden kann Schnittgut, beispielsweise geschnittene Grashalme, hängen bleiben und die Anlagerung von weiteren Verschmutzungen begünstigen.

Aus der US 4 065 913 A ist ein Rasenmäher mit einem Fadenmähkopf bekannt. Die Fäden des Fadenmähkopfs sind aus einem Innenbereich eines Grundkörpers zur Außenseite durchgesteckt. Die Fäden weisen an ihren im Innenbereich anliegenden Enden je einen Kopf auf. Aufgrund des Kopfes werden die Fäden bei Drehung des Grundkörpers im Grundkörper gehalten.

Aus der US 2004 0237315 A1 ist ein Fadenmähkopf eines Freischneiders bekannt, bei dem die Schneidfäden mittels einer Klemmeinrichtung im Fadenmähkopf gehalten sind.

Der Erfindung liegt die Aufgabe zugrunde, einen Fadenmähkopf für einen Freischneider der gattungsgemäßen Art zu schaffen, der eine verringerte Verschmutzungsneigung besitzt.

Diese Aufgabe wird durch einen Fadenmähkopf mit den Merkmalen des Anspruchs 1 gelöst.

Es ist vorgesehen, dass in dem Innenbereich ein Abschirmelement vorgesehen ist, wobei der in dem Innenbereich verlaufende Abschnitt des Schneidfadens bezogen auf die Drehrichtung im Windschatten des Abschirmelements angeordnet ist. Es hat sich gezeigt, dass durch ein Abschirmelement, in dessen Windschatten der Schneidfaden verläuft, die Verschmutzungsneigung des Fadenmähkopfes deutlich verringert werden kann. Das Abschirmelement leitet Verschmutzungen wie beispielsweise Schnittgut oder dergleichen an dem im Innenbereich angeordneten Abschnitt des Schneidfadens vorbei und vermeidet weitgehend, dass sich Verschmutzungen im Bereich des Schneidfadens im Innenbereich anlagern können. Dadurch kann auf einfache Weise die Verschmutzungsneigung des Fadenmähkopfes deutlich verringert werden. Verschmutzungen am Fadenmähkopf können eine Unwucht des Fadenmähkopfs und dadurch einen vergrößerten Verschleiß des Fadenmähkopfs bewirken. Dies kann durch die vorgesehene Gestaltung des Fadenmähkopfs auf einfache Weise vermieden werden.

Vorteilhaft ist das Abschirmelement benachbart zu der im Betrieb vorlaufenden Längsseite des im Innenbereich verlaufenden Abschnitts des Schneidfadens angeordnet. Der der Unterseite des Grundkörpers zugewandte untere Rand des Abschirmelements schließt dabei mit der Längsrichtung des Schneidfadens vorteilhaft einen Winkel von höchstens etwa 30° ein. Der Winkel, den der untere Rand mit der Längsrichtung des Schneidfadens einschließt, beträgt insbesondere höchstens etwa 20°. Als besonders vorteilhaft wird eine etwa parallele Anordnung des unteren Rands des Abschirmelements und der Längsrichtung des Schneidfadens angesehen. Der untere Rand des Abschirmelements ist dabei der Bereich, in dem das Abschirmelement in die Dachfläche übergeht oder an die Dachfläche anstößt. Bei einer gebogenen Ausbildung des Abschirmelements ist der untere Rand die Linie, an der das Abschirmelement den geringsten Abstand zur Unterseite des Grundkörpers aufweist und in die Dachfläche übergeht.

Um eine besonders geringe Verschmutzung des Fadenmähkopfes im Betrieb zu erreichen, ist vorgesehen, dass der Abstand des der Unterseite des Grundkörpers zugewandten unteren Rands des Abschirmelements zur Ebene der Unterseite des Grundkörpers geringer ist als der Abstand des benachbart zum Abschirmelement angeordneten Abschnitts des Schneidfadens. Der untere Rand des Abschirmelements steht demnach nach unten über den Schneidfaden über. Die Ebene der Unterseite des Grundkörpers ist dabei eine Ebene, in der die Unterseite des Grundkörpers liegt. Wird der Fadenmähkopf auf eine ebene, horizontale Fläche aufgelegt, so entspricht die Ebene der Unterseite der ebenen horizontalen Fläche. Die Ebene der Unterseite steht vorteilhaft senkrecht zur Drehachse des Fadenmähkopfes.

Es kann auch vorgesehen sein, dass das Abschirmelement nicht nach unten über den Faden übersteht, sondern in der gleichen, senkrecht zur Drehachse ausgerichteten Ebene endet wie der Faden oder dass ein Teilbereich des Fadens über das Abschirmelement nach unten übersteht. Die Anordnung des Abschnitts des Schneidfadens im Windschatten des Abschirmelements wird dann vorteilhaft durch geeignete Wahl der Kontur des Abschirmelements erreicht.

Vorteilhaft beträgt der Abstand des Abschirmelements zu der in Drehrichtung vorlaufenden Längsseite des Schneidfadens höchstens das 5fache des Überstands des Abschirmelements, also der Differenz zwischen dem Abstand des benachbart zum Abschirmelement angeordneten Abschnitts des Schneidfadens zur Ebene der Unterseite und dem Abstand des unteren Randes des Abschirmelements zur Ebene der Unterseite. Dadurch kann auf einfache Weise eine Anordnung des Schneidfadens im Windschatten des Abschirmelements erreicht werden.

Es ist vorgesehen, dass der Innenbereich zu der der Unterseite abgewandten Seite, also im Betrieb nach oben, von einer Dachfläche begrenzt ist. Um einen geringen Luftwiderstand des Fadenmähkopfes und eine günstige Strömungsführung zu erreichen, ist vorgesehen, dass die Dachfläche mindestens einen wendelförmigen Abschnitt aufweist, der vorlaufend zu dem Abschirmelement angeordnet ist und an den das Abschirmelement angrenzt. Der wendelförmige Abschnitt ist dabei ein Abschnitt, in dem sich der Abstand der Dachfläche zu der Ebene der Unterseite in Drehrichtung vergrößert. Der Abstand kann sich dabei konstant vergrößern, so dass der wendelförmige Abschnitt in Umfangsrichtung als Rampe ausgebildet ist. Die Steigung der Dachfläche verläuft in dem wendelförmigen Abschnitt dann linear. Es kann jedoch auch vorgesehen sein, dass der wendelförmige Abschnitt in Umfangsrichtung, also in einem kreisförmigen Schnitt um die Drehachse, gebogen verläuft. Die Steigung der Dachfläche verläuft in dem wendelförmigen Abschnitt dann nichtlinear.

Vorteilhaft erstreckt sich der wendelförmige Abschnitt über einen Winkelbereich um die Drehachse, der mindestens etwa 30%, insbesondere mindestens etwa 50%, vorzugsweise mindestens etwa 70% des Winkelabstandes zwischen in Umfangsrichtung benachbarten Schneidfäden beträgt. Bei zwei Schneidfäden, die einen Winkelabstand von etwa 180° zueinander aufweisen, erstreckt sich der wendelförmige Abschnitt demnach vorteilhaft über mindestens etwa 60°, insbesondere über mindestens etwa 90°, besonders vorteilhaft über etwa 126° Umfangswinkel. Der Winkelabstand ist dabei jeweils zur Längsachse der Schneidfäden gemessen. Bei einer abweichenden Anzahl von Schneidfäden ist der Winkelbereich, über den sich der wendelförmige Abschnitt erstreckt, vorteilhaft entsprechend angepasst.

Eine einfache Gestaltung ergibt sich, wenn das Abschirmelement eine Abschirmwand ist. Um die Anlagerung von Verschmutzungen am Fadenmähkopf zu vermeiden, ist vorteilhaft vorgesehen, dass die den Innenbereich bezogen auf die Drehachse radial nach außen begrenzende Umfangswand sich in mindestens einem Abschnitt in Richtung auf die Ebene der Unterseite des Grundkörpers erweitert. Dadurch wird begünstigt, dass Verschmutzungen, die sich im Innenbereich angelagert haben, bei einwirkender Fliehkraft von der Umfangswand aus dem Innenbereich geleitet werden und nach unten aus dem Fadenmähkopf herausgeschleudert werden können. Besonders vorteilhaft erweitert sich die Umfangswand zumindest in einem an die Unterseite angrenzenden Abschnitt. Vorteilhaft ist der Querschnitt des Innenbereichs kreisförmig, und der senkrecht zur Drehachse gemessene Durchmesser des Innenbereichs nimmt in dem mindestens einen Abschnitt, in dem sich die Umfangswand erweitert, in Richtung auf die Ebene der Unterseite des Grundkörpers hin, zu. Vorteilhaft beträgt der Durchmesser des Innenbereichs an der Unterseite des Grundkörpers mindestens etwa 120%, vorzugsweise mindestens etwa 130% des Durchmessers des Innenbereichs an dem der Unterseite des Grundkörpers zugewandten unteren Rand des Abschirmelements. Dadurch ergibt sich eine vergleichsweise große Öffnung des Innenbereichs nach unten, die die Anlagerung von Verschmutzungen im Innenbereich vermeidet und das Abfallen von Verschmutzungen nach unten begünstigt. Die Umfangswand ist in dem mindestens einen Abschnitt vorteilhaft als Konusabschnitt ausgebildet, wobei sich der Konus zur Unterseite hin erweitert. Verschmutzungen im Innenbereich werden im Betrieb aufgrund der Fliehkraft bezogen auf die Drehachse radial nach außen bewegt. Die Konusform der Umfangswand bewirkt, dass Verschmutzungen, die aufgrund der Fliehkraft nach außen bewegt werden, nach unten aus dem Innenbereich geleitet werden.

Um eine definierte Lage des im Innenbereich angeordneten Abschnitts des Schneidfadens zu erreichen, ist vorteilhaft vorgesehen, dass der Schneidfaden mit seinem in den Innenbereich ragenden Ende an einem Anschlag des Fadenmähkopfs anliegt. Vorteilhaft ist der Anschlag etwa senkrecht zur Längsrichtung des Schneidfadens ausgerichtet. Auch eine geringfügig geneigte Anordnung des Anschlags kann jedoch vorteilhaft sein.

Um eine sichere Fixierung des Schneidfadens an dem Grundkörper zu erreichen, ist vorteilhaft vorgesehen, dass der Schneidfaden von einer Klemmeinrichtung an dem Grundkörper gehalten ist, die eine Bewegung des Schneidfadens zur Außenseite des Grundkörpers blockiert. Um einen einfachen Austausch des Schneidfadens zu ermöglichen, ist vorteilhaft vorgesehen, dass die Klemmeinrichtung eine Bewegung des Schneidfadens in Richtung auf den Innenbereich zulässt. Dadurch kann der Schneidfaden vom Bediener im Innenbereich gegriffen und nach innen durchgezogen werden. Um ein einfaches Greifen des Schneidfadens in dem Innenbereich zu ermöglichen, ist vorgesehen, dass das Abschirmelement mit der Dachfläche des Innenbereichs eine Aufnahme für den Schneidfaden bildet, die zu der im Betrieb nachlaufenden Seite hin mindestens teilweise offen ist. An der im Betrieb nachlaufenden Seite des Schneidfadens ist die Anlagerung von Verschmutzungen aufgrund der Lage im Windschatten weitgehend vermieden, so dass dieser Bereich für eine gute Zugänglichkeit des Schneidfadens offen sein kann. Die Aufnahme ist dabei mindestens teilweise, insbesondere vollständig zu der im Betrieb nachlaufenden Seite hin offen. Bevorzugt ist die Aufnahme über einen Bereich zu der im Betrieb nachlaufenden Seite hin offen, der ein einfaches Greifen des Schneidfadens durch den Bediener ermöglicht, also beispielsweise mindestens fingerbreit ist.

Ausführungsbeispiele der Erfindung werden im Folgenden anhand der Zeichnung erläutert. Es zeigen:
- Fig. 1: eine schematische Darstellung eines von einem Bediener gehaltenen Freischneiders,
- Fig. 2: eine Ansicht von unten auf den Fadenmähkopf des Freischneiders aus Fig. 1,
- Fig. 3 und 4: perspektivische Darstellungen des Fadenmähkopfes,
- Fig. 5: eine Ansicht von unten auf den Grundkörper des Fadenmähkopfes ohne daran angeordnete Schneidfäden,
- Fig. 6 und 7: perspektivische Darstellungen des Grundkörpers aus Fig. 5,
- Fig. 8: einen Schnitt durch den Fadenmähkopf entlang der Linie IX-IX in Fig. 12 mit daran angeordneten Schneidfäden,
- Fig. 9: einen Schnitt durch den Grundkörper des Fadenmähkopfes entlang der Linie IX-IX in Fig. 12 ohne daran angeordnete Schneidfäden,
- Fig. 10: einen Ausschnitt aus Fig. 8,
- Fig. 11: eine vergrößerte Darstellung des Innenbereichs des Fadenmähkopfes aus Fig. 2,
- Fig. 12: eine Ansicht auf den Fadenmähkopf ohne daran angeordnete Schneidfäden von oben,
- Fig. 13: einen Schnitt entlang der Linie XIII-XIII in Fig. 12,
- Fig. 14: einen Schnitt entlang der Linie XIV-XIV in Fig. 12,
- Fig. 15: einen Schnitt entlang der Linie XV-XV in Fig. 12,
- Fig. 16: einen Schnitt entlang der Linie XVI-XVI in Fig. 12,
- Fig. 17: einen Schnitt entlang der Linie XVII-XVII in Fig. 12,
- Fig. 18: eine schematische Darstellung des Verlaufs der Dachfläche in Umfangs-richtung für den Fadenmähkopf aus den Figuren 2 bis 17,
- Fig. 19 und 20: schematische Darstellungen entsprechend Fig. 18 für Ausführungs-beispiele des Abschirmelements.

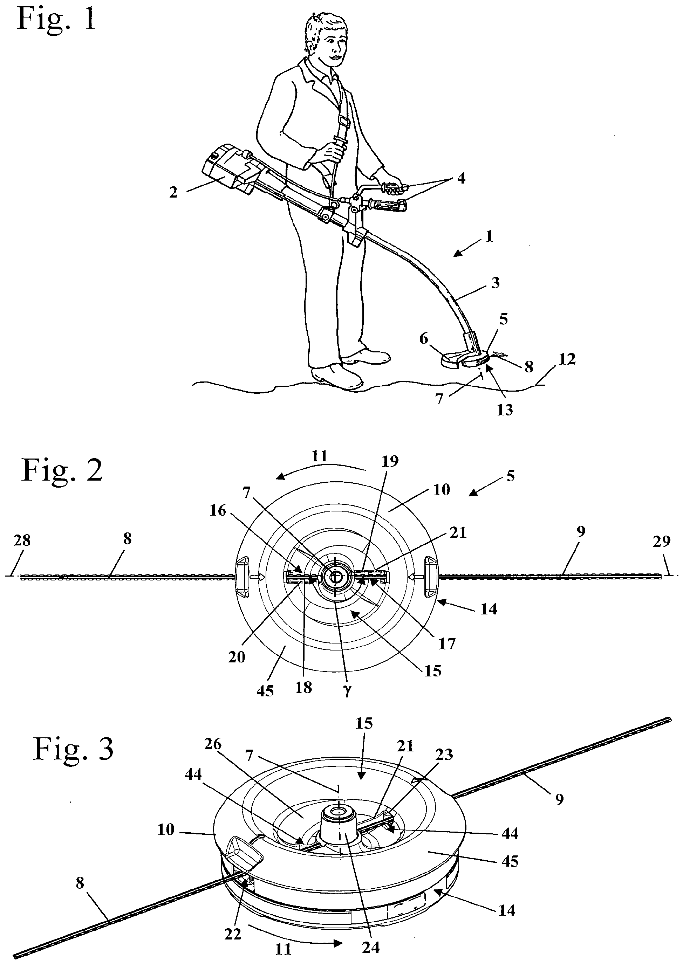

Fig. 1 zeigt schematisch einen Freischneider 1, der von einem Bediener gehalten ist. Der Freischneider 1 besitzt ein Gehäuse 2, in dem ein nicht gezeigter Antriebsmotor angeordnet ist. Der Freischneider 1 besitzt einen Schaft 3, der mit einem Ende am Gehäuse 2 angeordnet ist und dessen anderes Ende einen Fadenmähkopf 5 trägt. Durch den Schaft 3 ragt eine nicht gezeigte, von dem im Gehäuse 2 angeordneten Antriebsmotor angetriebene Antriebswelle, die den Fadenmähkopf 5 um eine Drehachse 7 rotierend antreibt. Der Fadenmähkopf 5 ist an der im Betrieb dem Bediener zugewandten Seite von einer Schutzhaube 6 abgedeckt. Der Fadenmähkopf 5 besitzt einen Schneidfaden 8, der zum Schneiden von Schnittgut wie Gras, Gestrüpp oder dergleichen dient. Der Fadenmähkopf 5 besitzt eine im Betrieb dem Boden 12 zugewandte Unterseite 13, die an der dem Schaft 3 abgewandten Seite des Fadenmähkopfes 5 angeordnet ist. Zum Führen des Freischneiders 1 im Betrieb sind Handgriffe 4 vorgesehen, die im Ausführungsbeispiel an einem Grifflenker angeordnet sind, der am Schaft 3 befestigt ist.

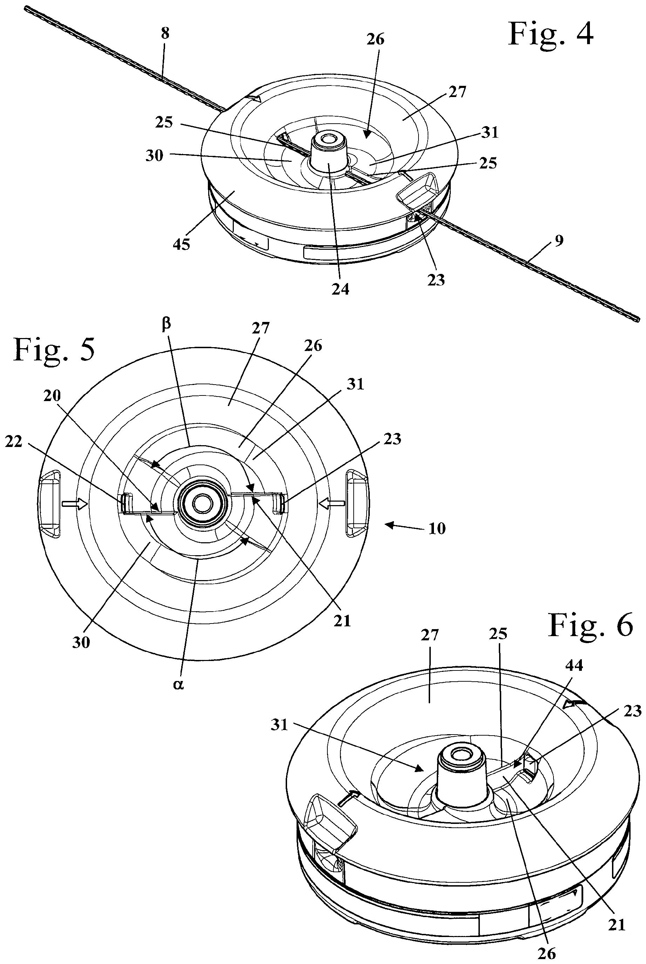

Fig. 2 zeigt den Fadenmähkopf 5 von der Unterseite 13 gesehen. Am Fadenmähkopf 5 sind zwei Schneidfäden 8 und 9 einander gegenüberliegend angeordnet. Die Längsrichtung 28 des Schneidfadens 8 und die Längsrichtung 29 des Schneidfadens 9 sind im Ausführungsbeispiel koaxial zueinander ausgerichtet und schneiden die Drehachse 7. Es kann jedoch auch vorgesehen sein, dass die Längsrichtungen 28 und 29 seitlich zueinander versetzt sind. Die beiden Schneidfäden 8 und 9 besitzen zueinander einen Winkelabstand γ, der 180° beträgt. Der Winkelabstand γ ist dabei zwischen den Längsrichtungen 28, 29 der Schneidfäden 8, 9 gemessen. Auch ein anderer Winkelabstand γ und/oder eine andere Anzahl von Schneidfäden kann vorteilhaft sein. Der Fadenmähkopf 5 besitzt einen Grundkörper 10, der in einer Drehrichtung 11 um die Drehachse 7 rotierend angetrieben ist. Der Grundkörper 10 besitzt eine Außenseite 14, die durch einen auch in Fig. 3 gezeigten Ringabschnitt 45 von einem Innenbereich 15 getrennt ist. Der Innenbereich 15 ist zur Unterseite 13 (Fig. 1) hin offen. Der Fadenmähkopf 5 besitzt in Fig. 3 gezeigte Öffnungen 22 und 23, die den Ringabschnitt 45 durchragen und durch die die Schneidfäden 8 und 9 von der Außenseite 14 in den Innenbereich 15 ragen. In den Innenbereich 15 ragt eine in Fig. 3 und 4 gezeigte Nabe 24, die zur Lagerung des Fadenmähkopfes 5 auf einer Antriebswelle des Freischneiders 1 dient.
Wie Fig. 2 zeigt, ragt ein Abschnitt 16 des Schneidfadens 8 in den Innenbereich 15. Entsprechend ragt ein Abschnitt 17 des Schneidfadens 9 in den Innenbereich 15. In Drehrichtung 11 vorlaufend zum Abschnitt 16 ist eine Abschirmwand 20 im Innenbereich 15 vorgesehen. Die Abschirmwand 20 ist benachbart zu der vorlaufenden Längsseite 18 des Abschnitts 16 des Schneidfadens 8 angeordnet. Im Ausführungsbeispiel liegt die Abschirmwand 20 parallel zur Längsseite 18. Entsprechend ist vorlaufend zum Abschnitt 17 des Schneidfadens 9 eine Abschirmwand 21 vorgesehen, die benachbart zu einer vorlaufenden Längsseite 19 des Schneidfadens 9 angeordnet ist und parallel zu dieser verläuft. Die Abschirmwände 20, 21 sind eben ausgebildet.

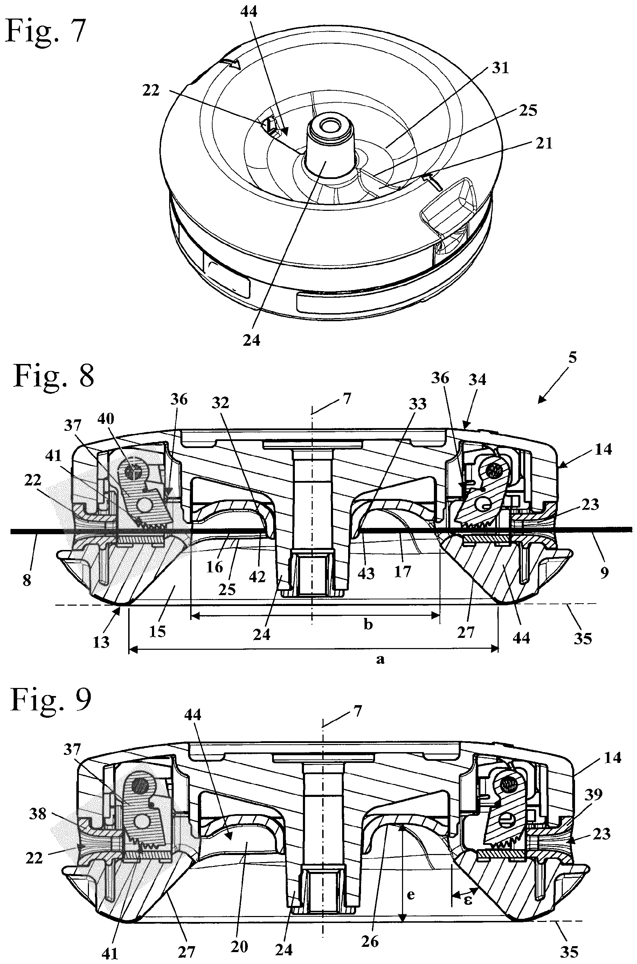

Wie die Figuren 3 und 4 zeigen, ist der Innenbereich 15 nach oben, also zu der der Unterseite 13 abgewandten Seite von einer Dachfläche 26 begrenzt. Die Dachfläche 26 bildet benachbart zur Öffnung 22 mit der Abschirmwand 20 eine Aufnahme 44 für den Abschnitt 16 des Schneidfadens 8. Mit der Abschirmwand 21 bildet die Dachfläche 26 im Bereich der Öffnung 23 eine entsprechende Aufnahme 44 für den Abschnitt 17 des Schneidfadens 9. Die Aufnahmen 44 sind jeweils zu der in Drehrichtung 11 nachlaufenden Seite hin offen. Die Gestaltung der Aufnahmen 44 ist auch in den Figuren 6 und 7 gezeigt. Die Aufnahmen 44 grenzen jeweils an die Öffnungen 22, 23 an, durch die die Schneidfäden 8 und 9 in den Innenraum 15 eintreten und erstrecken sich bis näherungsweise zur Nabe 24.

In Drehrichtung 11 vorlaufend zur Abschirmwand 20 ist ein wendelförmiger Abschnitt 30 angeordnet, der durch die Dachfläche 26 gebildet ist und der sich über einen in Fig. 5 gezeigten Winkel α erstreckt. Der Winkel α beträgt vorteilhaft mindestens etwa 30%, insbesondere mindestens etwa 50%, vorzugsweise mindestens etwa 70% des in Fig. 2 gezeigten Winkelabstands γ zwischen den Schneidfäden 8 und 9. Im Ausführungsbeispiel beträgt der Winkel α etwa 130° bis etwa 140°.

Vorlaufend zur Abschirmwand 21 ist ein wendelförmiger Abschnitt 31 vorgesehen, der sich über einen Winkel β erstreckt. Auch der Winkel β beträgt mindestens etwa 30%, insbesondere mindestens etwa 50%, vorzugsweise mindestens etwa 70% des Winkelabstands γ. Im Ausführungsbeispiel sind die Winkel α und β gleich groß.

Wie die Figuren 4 und 5 zeigen, ist der Innenbereich 15 nach außen von einer Umfangswand 27 begrenzt, die von der Innenseite des Ringabschnitts 45 gebildet ist. Die Umfangswand 27 erweitert sich in Richtung auf die Unterseite 13 (Fig. 1) des Fadenmähkopfes 5. Wie die Figuren 3, 4, 6 und 7 zeigen, verläuft die Dachfläche 26 in den wendelförmigen Abschnitten 30 und 31 in Umfangsrichtung wendel- oder spiralförmig. Der Abstand der Dachfläche 26 zur Unterseite 13 des Fadenmähkopfes 5 verringert sich in den wendelförmigen Abschnitten 30 und 31 bis zu einer unteren Kante 25 der Abschirmwände 20 und 21. An der unteren Kante 25 besitzen die Abschirmwände 20, 21 den geringsten Abstand zur Unterseite 13.

Der Fadenmähkopfs ist achsensymmetrisch zur Drehachse 7 ausgebildet. Die Abschirmwände 20 und 21, die wendelförmigen Abschnitte 30 und 31 und die beiden Aufnahmen 44 sind jeweils identisch ausgebildet.

Wie Fig. 8 zeigt, sind die Schneidfäden 8 und 9 durch Klemmeinrichtungen 36 im Grundkörper 10 gehalten. Die Klemmeinrichtungen 36 besitzen jeweils eine schwenkbar gelagerte Klinke 37, die um eine Schwenkachse 40 schwenkbar ist. Die Schwenkachse 40 ist so angeordnet, dass die Klinken 37 bei einer Schwenkbewegung bezogen auf die Drehachse 7 des Fadenmähkopfs 5 nach innen die Klemmwirkung verringern und den Schneidfaden 8, 9 freigeben. Eine Bewegung der Schneidfäden 8 und 9 radial nach außen bewirkt eine Verstärkung der Klemmwirkung der Klemmeinrichtungen 36. Im Bereich ihres Endes besitzen die Klinken 37 eine Rückhaltestruktur 41, die im Ausführungsbeispiel durch eine Zahnstruktur gebildet ist. Die Rückhaltestruktur 41 liegt an den Schneidfäden 8 und 9 an. Dadurch sind die Schneidfäden 8 und 9 sicher an den Klemmeinrichtungen 36 gehalten. Um die Schneidfäden 8, 9 vom Fadenmähkopf 5 zu entnehmen, können die Abschnitte 16 und 17 vom Bediener gegriffen und die Schneidfäden 8 und 9 nach innen durch die Klemmeinrichtungen 36 gezogen und über den Innenbereich 15 entnommen werden.

Wie Fig. 8 auch zeigt, sind benachbart zur Nabe 24 Anschläge 32 und 33 für die Abschnitte 16 und 17 gebildet. Der Abschnitt 16 des Schneidfadens 8 liegt in der gezeigten Darstellung mit seinem freien Ende 42 an dem Anschlag 32 an. Der Abschnitt 17 liegt mit seinem freien Ende 43 an dem Anschlag 33 an. Die Anschläge 32 und 33 können vorteilhaft senkrecht zur Längsrichtung 28, 29 (Fig. 2) der Schneidfäden 8 und 9 ausgerichtet sein. Die Anschläge 32, 33 dienen als Unterstützung bei der Einstellung des Schnittkreises. Der Bediener kann zwei gleich lange Schneidfäden 8, 9 jeweils bis zum Anschlag 32, 33 einschieben. Die nach außen ragenden freien Enden der beiden Schneidfäden 8, 9 haben dann den gleichen Abstand zur Drehachse 7. Die Schneidfäden 8, 9 müssen jedoch nicht zwingend bis zu den Anschlägen 32, 33 eingeschoben werden.

Wie Fig. 8 auch zeigt, erweitert sich die Umfangswand 27 in Richtung auf eine Ebene 35 der Unterseite 13. Wird der Fadenmähkopf 5 mit seiner Unterseite 13 auf eine ebene, horizontale Auflagefläche aufgelegt, so entspricht die Ebene 35 der Auflagefläche. Wie Fig. 8 auch zeigt, besitzt der Fadenmähkopf 5 eine der Unterseite 13 abgewandte und dem Schaft 3 (Fig. 1) zugewandte Oberseite 34. Die Umfangswand 27 besitzt im Ausführungsbeispiel einen kreisförmigen Querschnitt. An der Kante 25 besitzt der Innenbereich 15 einen Durchmesser b. Der Durchmesser b ist dabei an der radial außenliegenden Seite der Kante 25 gemessen. In der Ebene 35 der Unterseite 13 besitzt der Innenbereich 15 einen Durchmesser a, der deutlich größer als der Durchmesser b ist. Der Durchmesser a beträgt vorteilhaft mindestens etwa 120% insbesondere mindestens etwa 130% des Durchmessers b. Wie Fig. 9 zeigt, bildet die Umfangswand 27 einen Konusabschnitt. Der Konuswinkel ε, also der Winkel, den die Umfangswand 27 mit der Drehachse 7 einschließt, beträgt vorteilhaft mindestens etwa 20°, insbesondere mindestens etwa 30°. Im Ausführungsbeispiel beträgt der Konuswinkel ε etwa 45°.

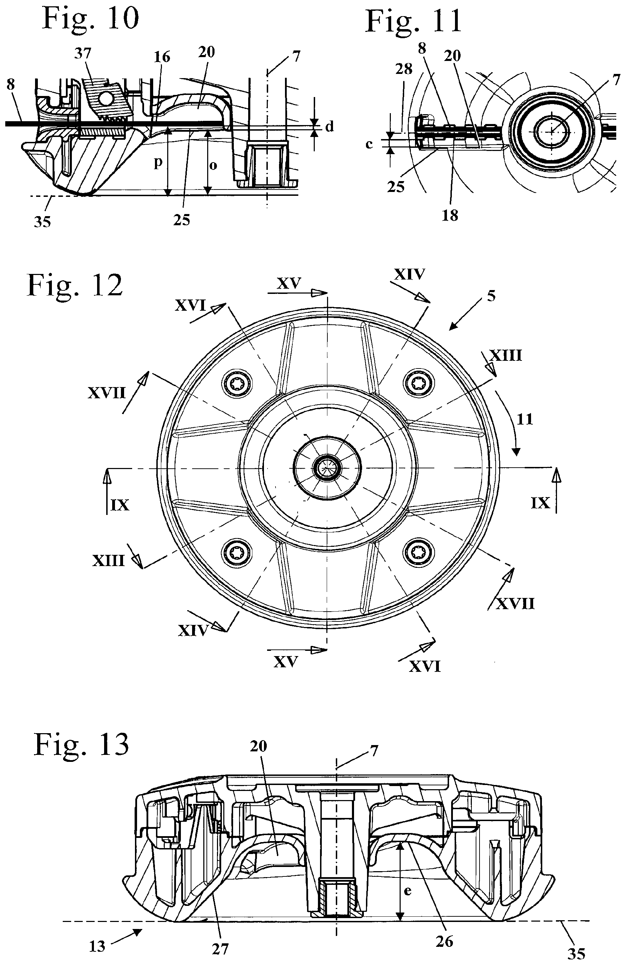

Fig. 9 zeigt einen Schnitt durch den Fadenmähkopf 5 unmittelbar benachbart zur Abschirmwand 20 und zur Abschirmwand 21 durch die Aufnahmen 44 für die Abschnitte 16 und 17 der Schneidfäden 8 und 9. Die Schnittebene schneidet die Öffnungen 22 und 23 für die Schneidfäden 8, 9 mittig. In diesem Bereich besitzt die Dachfläche 26 zur Ebene 35 einen ersten Abstand e. Der Abstand e ist deutlich größer als der in Fig. 10 gezeigte Abstand p des im Innenbereich 15 angeordneten Abschnitts 16 des Schneidfadens 8 zur Ebene 35. Dadurch kann ein Bediener zum Entnehmen des Schneidfadens 8, 9 mit dem Finger in der Darstellung in Fig. 9 über den Abschnitt 16 oder 17 des Schneidfadens greifen und den Schneidfaden nach unten wegziehen. Wie Fig. 10 auch zeigt, ist der Abstand o des unteren Rands 25 der Abschirmwand 20 zur Ebene 35 kleiner als der Abstand p. Dadurch steht die Abschirmwand 20 um einen Überstand d nach unten über den Schneidfaden 8 über. Die Abstände e, p und o sind dabei parallel zur Drehachse 7 gemessen. Der untere Rand 25 der Abschirmwand 20 ist bei der eben ausgebildeten Abschirmwand 20 die Kante der Abschirmwand 20, an der die Abschirmwand 20 an die Dachfläche 26 angrenzt. Der Grundkörper 10 besitzt benachbart zu seiner Außenseite 14 eine Hülse 38, die die Öffnung 22 für den Schneidfaden 8 begrenzt, sowie eine Hülse 39, die die Öffnung 23 für den Schneidfaden 9 begrenzt.

Wie Fig. 11 zeigt, besitzt die Längsseite 18 des Schneidfadens 8 zur Abschirmwand 20 einen Abstand c, der sehr gering ist. Der Abstand c ist im Ausführungsbeispiel größer als der Überstand d. Der Abstand c ist in einer senkrecht zur Drehachse 7 angeordneten Ebene gemessen. Die Längsseite 18 verläuft im Ausführungsbeispiel etwa parallel zum unteren Rand 25. Vorteilhaft schließt die Längsrichtung 28, 29 des Schneidfadens 8, 9 mit dem unteren Rand 25 in der Schnittebene senkrecht zur Drehachse 7 einen Winkel von höchstens etwa 30°, insbesondere höchstens etwa 20° ein. Besonders bevorzugt ist eine etwa parallele Anordnung.

Die Figuren 13 bis 17 zeigen die Gestaltung der wendelförmigen Abschnitte 30 und 31 im Einzelnen. In dem in Fig. 13 gezeigten Schnitt in geringem Winkelabstand in Drehrichtung nach den Abschirmwänden 20 und 21 besitzt die Dachfläche 26 zur Ebene 35 einen Abstand e, der dem Abstand e unmittelbar benachbart zur Abschirmwand 20 und 21 (Fig. 9) entspricht. Der Abstand e ist demnach über einen Bereich konstant. Die Schnittebene in Fig. 13 besitzt zur Schnittebene in Fig. 9 einen Winkelabstand von 30° entgegen der Drehrichtung 11.

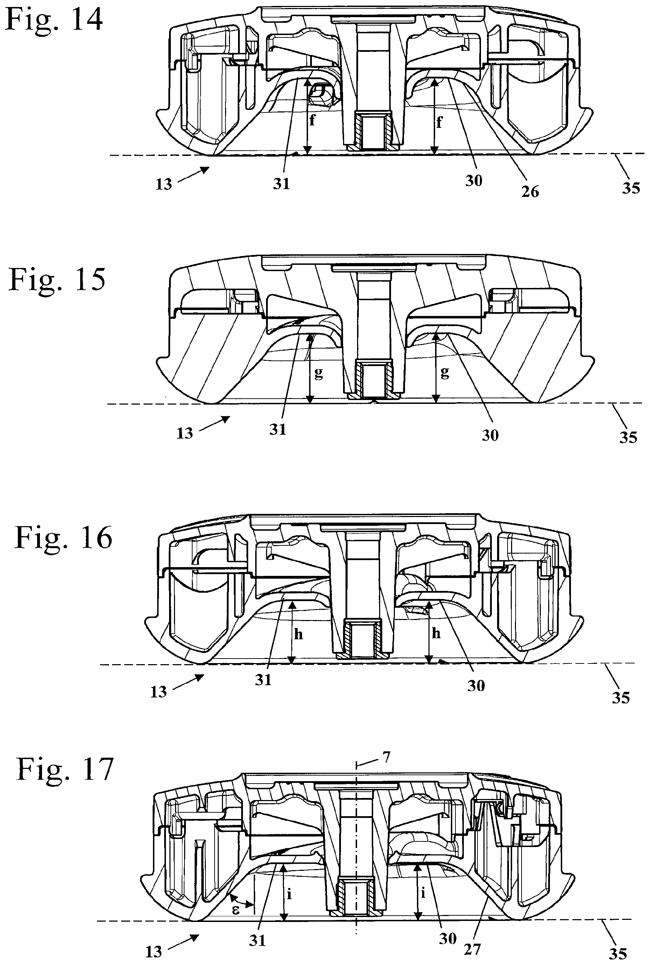

Fig. 14 zeigt einen Schnitt, der in einem Winkelabstand von 60° entgegen der Drehrichtung 11 zu dem in Fig. 9 gezeigten Schnitt durch die Öffnungen 22 und 23 liegt. In der in Fig. 14 gezeigten Schnittdarstellung beginnen die wendelförmigen Abschnitte 30 und 31, so dass sich der Abstand der Dachfläche 26 zur Ebene 35 verringert. In der in Fig. 14 gezeigten Schnittdarstellung besitzen die wendelförmigen Abschnitte 30 und 31 zur Ebene 35 einen parallel zur Drehachse 7 gemessenen Abstand f, der etwas kleiner als der Abstand e ist.

Fig. 15 zeigt einen Schnitt in einem Winkelabstand von 90° zum Schnitt durch die Schneidfäden 8 und 9 und zum Schnitt in Fig. 9. In dieser Schnittebene besitzen die wendelförmigen Abschnitte 30 und 31 einen Abstand g zur Ebene 35, der deutlich kleiner als der Abstand f ist.

Fig. 16 zeigt einen Schnitt in einem Winkelabstand von weiteren 30° entgegen der Drehrichtung 11 zum Schnitt in Fig. 15. In dieser Schnittebene besitzen die wendelförmigen Abschnitte 30 und 3 leinen Abstand h zur Ebene 35, der kleiner als der Abstand g ist.

Fig. 17 zeigt einen Schnitt in Drehrichtung 11 unmittelbar nach den Abschirmwänden 20 und 21. In dieser Schnittebene besitzen die wendelförmigen Abschnitte 30 und 31 einen Abstand i zur Ebene 35, der kleiner als der Abstand h und nur geringfügig größer als der in Fig. 10 gezeigte Abstand o des unteren Rands 25 zur Ebene 35 ist. Der Abstand der wendelförmigen Abschnitte 30 und 31 zur Ebene 35 der Unterseite 13 verringert sich demnach entgegen der Drehrichtung 11. Wird der Fadenmähkopf 5 in Drehrichtung 11 bewegt, so sinkt für ein feststehendes, im Bereich der Dachfläche 26 und der wendelförmigen Abschnitte 30 bzw. 31 angeordnetes Element der Abstand der Dachfläche 26 zur Ebene 35 kontinuierlich ab, bis der untere Rand 25 erreicht ist. An der Dachfläche 26 anliegendes Schnittgut wird dadurch nach unten gedrückt. Die Abschnitte 16 und 17 der Schneidfäden 8 und 9 liegen dabei hinter den Abschirmwänden 20 und 21, also im Windschatten der Abschirmwände 20 und 21. Dadurch wird weitgehend vermieden, dass sich Verschmutzungen wie beispielsweise Schnittgut am Fadenmähkopf 5 anlagern können.

In Fig. 17 ist auch der Konuswinkel ε gezeigt. Die Umfangswand 27 verläuft in dieser Schnittebene von der Ebene 35 bis nahe an die Dachfläche 26 in dem Konuswinkel ε zur Drehachse 7 geneigt. Die Umfangswand 27 geht dabei gerundet in die Dachfläche 26 über.

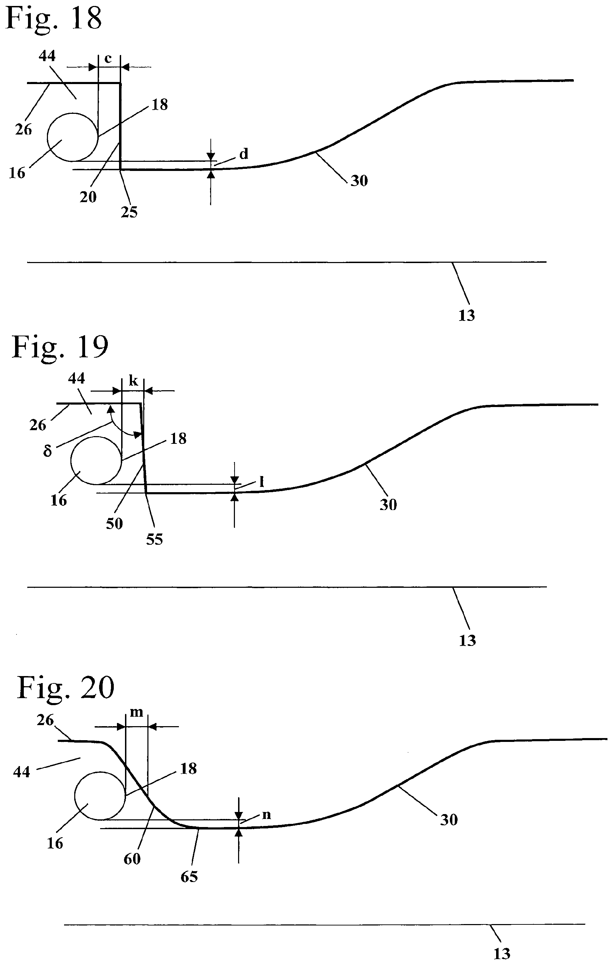

Fig. 18 zeigt den Abstand c und den Überstand d in einer schematischen Darstellung, die einen Schnitt durch die Dachfläche 26 in Umfangsrichtung, also kreisförmig um die Drehachse 7 zeigt. Wie Fig. 18 zeigt, ist der Überstand d kleiner als der Abstand c. Der Abstand c beträgt vorteilhaft höchstens das 5fache des Überstands d, also der Differenz zwischen dem Abstand o des benachbart zur Abschirmwand 20 angeordneten Abschnitts 16 des Schneidfadens 8 zur Ebene 35 und dem Abstand p des unteren Rands 25 der Abschirmwand 20 zur Ebene 35. Der Abstand c ist dabei zur vorlaufenden Längsseite 18 des Abschnitts 16 des Schneidfadens 8 gemessen. Wie Fig. 18 auch zeigt, verläuft die Abschirmwand senkrecht, bildet mit der Dachfläche 26 an der Aufnahme 44 also einen Winkel von 90°.

Die Figuren 19 und 20 zeigen Ausführungsbeispiele für Abschirmwände 50 und 60. Die in Fig. 19 gezeigte Abschirmwand 50 ist zur Dachfläche 26 im Bereich der Aufnahme 44 um einen Winkel δ geneigt, der größer als 90° ist. Der Winkel δ kann beispielsweise von etwa 92° bis etwa 120° betragen. Auch ein größerer Winkel δ kann vorteilhaft sein. Die Abschirmwand 50 ist dabei als ebene Wand ausgebildet. Die Abschirmwand 50 besitzt zur Längsseite 18 des Abschnitts 16 einen Abstand k, der senkrecht zur Längsseite 18 und in einer Ebene senkrecht zur Drehachse 7 gemessen ist. Die Abschirmwand 50 besitzt einen unteren Rand 55, der über den Abschnitt 16 um einen Überstand 1 übersteht. Der Abstand k ist vorteilhaft größer als der Überstand 1 und beträgt höchstens das 5fache des Überstandes 1. Der untere Rand 55 ist die Kante, an der das ebene Abschirmelement 50 in die Dachfläche 26 übergeht.

Fig. 20 zeigt ein weiteres Ausführungsbeispiel einer Abschirmwand 60. Die Abschirmwand 60 ist nicht als ebene Wand ausgebildet, sondern verläuft in Umfangsrichtung zur Drehachse 7 gebogen. Die Abschirmwand 60 ist dabei zur Dachfläche 26 an der Aufnahme 44 um einen Winkel von deutlich mehr als 90° geneigt. Die Abschirmwand 60 geht bogenförmig in die Dachfläche 26 an der Aufnahme 44 und in den wendelförmigen Abschnitt 30 über. Die Abschirmwand 60 besitzt einen unteren Rand 65, der der Bereich der Abschirmwand 60 ist, der den geringsten Abstand zur Ebene 35 der Unterseite 13 besitzt. Am unteren Rand 65 geht die Abschirmwand 60 in den wendelförmigen Abschnitt 30 der Dachfläche 26 über. Der untere Rand 65 besitzt gegenüber dem Abschnitt 16 des Schneidfadens 8 einen Überstand n. Die Längsseite 18 des Abschnitts 16 des Schneidfadens 8 besitzt einen senkrecht zur Längsrichtung 18 und in einer Ebene senkrecht zur Drehachse 7 gemessenen Abstand m zur Abschirmwand 60. Der Abstand m beträgt höchstens das 5fache des Überstands n.

## Patentansprüche

1. Fadenmähkopf für einen Freischneider, wobei der Fadenmähkopf (5) im Betrieb in einer Drehrichtung (11) um eine Drehachse (7) rotierend antreibbar ist, wobei der Fadenmähkopf (5) einen Grundkörper (10) besitzt, an dem mindestens ein Schneidfaden (8, 9) gehalten ist, wobei der Grundkörper (10) eine im Betrieb dem Boden (12) zugewandte Unterseite (13) besitzt, wobei der Schneidfaden (8, 9) sich von einer Außenseite (14) des Grundkörpers (10) durch eine Öffnung (22, 23) bis in einen zur Unterseite (13) des Grundkörpers (10) hin offenen Innenbereich (15) des Grundkörpers (10) erstreckt, wobei in dem Innenbereich (15) ein Abschirmelement vorgesehen ist, wobei der in dem Innenbereich (15) verlaufende Abschnitt (16, 17) des Schneidfadens (8, 9) bezogen auf die Drehrichtung (11) im Windschatten des Abschirmelements angeordnet ist, wobei der Innenbereich (15) zu der der Unterseite (13) abgewandten Seite von einer Dachfläche (26) begrenzt ist, **dadurch gekennzeichnet, dass** das Abschirmelement (20, 21, 50, 60) mit der Dachfläche (26) des Innenbereichs (15) eine Aufnahme (44) für den Schneidfaden (8, 9) bildet, die zu der im Betrieb nachlaufenden Seite hin mindestens teilweise offen ist.

2. Fadenmähkopf nach Anspruch 1,
**dadurch gekennzeichnet, dass** das Abschirmelement benachbart zu der im Betrieb vorlaufenden Längsseite (18, 19) des im Innenbereich (15) verlaufenden Abschnitts (16, 17) des Schneidfadens (8, 9) angeordnet ist.

3. Fadenmähkopf nach Anspruch 1 oder 2,
**dadurch gekennzeichnet, dass** der der Unterseite (13) des Grundkörpers (10) zugewandte untere Rand (25, 55, 65) des Abschirmelements mit der Längsrichtung (28, 29) des Schneidfadens (8, 9) einen Winkel von höchstens etwa 30° einschließt.

4. Fadenmähkopf nach einem der Ansprüche 1 bis 3,
**dadurch gekennzeichnet, dass** der Abstand (o) des der Unterseite (13) des Grundkörpers (10) zugewandten unteren Rands (25, 55, 65) des Abschirmelements zur Ebene (35) der Unterseite (13) des Grundkörpers (10) geringer ist als der Abstand (p) des benachbart zum Abschirmelement angeordneten Abschnitts (16, 17) des Schneidfadens (8, 9).

5. Fadenmähkopf nach Anspruch 4,
**dadurch gekennzeichnet, dass** der Abstand (c, k, m) des Abschirmelements zu der in Drehrichtung (11) vorlaufenden Längsseite (18, 19) des Schneidfadens (8, 9) höchstens das 5fache der Differenz (d, l, n) zwischen dem Abstand (o) des benachbart zum Abschirmelement angeordneten Abschnitts (16, 17) des Schneidfadens (8, 9) zur Ebene (35) der Unterseite (13) und dem Abstand (p) des unteren Rands (25, 55, 65) des Abschirmelements zur Ebene (35) der Unterseite (13) beträgt.

6. Fadenmähkopf nach einem der Ansprüche 1 bis 5,
**dadurch gekennzeichnet, dass** die Dachfläche (13) mindestens einen wendelförmigen Abschnitt (30, 31) aufweist, der vorlaufend zu dem Abschirmelement angeordnet ist und an das Abschirmelement angrenzt, wobei sich der Abstand (e, f, g, h, i) der Dachfläche (26) zu der Ebene (35) der Unterseite (13) in dem wendelförmigen Abschnitt (30, 31) in Drehrichtung (11) vergrößert.

7. Fadenmähkopf nach Anspruch 6,
**dadurch gekennzeichnet, dass** der wendelförmige Abschnitt (30, 31) sich über einen Winkelbereich (α, β) um die Drehachse (7) erstreckt, der mindestens etwa 30% des Winkelabstands (γ) zwischen in Umfangsrichtung benachbarten Schneidfäden (8, 9) beträgt.

8. Fadenmähkopf nach einem der Ansprüche 1 bis 7,
**dadurch gekennzeichnet, dass** das Abschirmelement eine Abschirmwand (20, 21, 50, 60) ist.

9. Fadenmähkopf nach einem der Ansprüche 1 bis 8,
**dadurch gekennzeichnet, dass** die den Innenbereich (15) bezogen auf die Drehachse (7) radial nach außen begrenzende Umfangswand (27) sich in mindestens einem Abschnitt in Richtung auf die Ebene (35) der Unterseite (13) des Grundkörpers (10) erweitert.

10. Fadenmähkopf nach Anspruch 9,
**dadurch gekennzeichnet, dass** der Querschnitt des Innenbereichs (15) kreisförmig ist und der senkrecht zur Drehachse (7) gemessene Durchmesser (a, b) des Innenbereichs (15) in dem mindestens einen Abschnitt in Richtung auf die Ebene (35) der Unterseite (13) des Grundkörpers (10) hin zunimmt.

11. Fadenmähkopf nach Anspruch 10,
**dadurch gekennzeichnet, dass** der Durchmesser (a) des Innenbereichs (15) an der Unterseite (13) des Grundkörpers (10) mindestens etwa 120% des Durchmessers (b) des Innenbereichs (15) an dem der Unterseite (13) des Grundkörpers (10) zugewandten unteren Rand (25, 55, 65) des Abschirmelements beträgt.

12. Fadenmähkopf nach einem der Ansprüche 1 bis 11,
**dadurch gekennzeichnet, dass** der Schneidfaden (8, 9) mit seinem in den Innenbereich (15) ragenden Ende (42, 43) an einem Anschlag (32, 33) des Fadenmähkopfes (5) anliegt.

13. Fadenmähkopf nach einem der Ansprüche 1 bis 12,
**dadurch gekennzeichnet, dass** der Schneidfaden (8, 9) an dem Grundkörper (10) von einer Klemmeinrichtung (36) gehalten ist, die eine Bewegung des Schneidfadens (8, 9) zur Außenseite (14) des Grundkörpers (10) blockiert und eine Bewegung des Schneidfadens (8, 9) in Richtung auf den Innenbereich (15) zulässt.

## Claims

1. String mowing head for a string mower, wherein the string mowing head (5) can in operation be driven to rotate about an axis of rotation (7) in a direction of rotation (11), wherein the string mowing head (5) has a base body (10), on which at least one cutting string (8, 9) is held, wherein the base body (10) has an underside (13) facing the ground (12) in operation, wherein the cutting string (8, 9) extends from an outside (14) of the base body (10) through an opening (22, 23) to an interior region (15) of the base body (10) which is open towards the underside (13) of the base body (10), wherein a shielding element is provided in the interior region (15), wherein the section (16, 17) of the cutting string (8, 9) which extends in the interior region (15) is located on the lee side of the shielding element relative to the direction of rotation (11), wherein the interior region (15) is bounded by a roof surface (26) on the side remote from the underside (13),
**characterised in that** the shielding element (20, 21, 50, 60) together with the roof surface (26) of the interior region (15) forms a receptacle (44) for the cutting string (8, 9) which is at least partially open towards the side which is trailing in operation,

2. String mowing head according to claim 1,
**characterised in that** the shielding element is located adjacent to the long side (18, 19), which is leading in operation, of the section (16, 17) of the cutting string (8, 9) which extends in the interior region (15).

3. String mowing head according to claim 1 or 2,
**characterised in that** the lower edge (25, 55, 65) of the shielding element, which faces the underside (13) of the base body (10), encloses with the longitudinal direction (28, 29) of the cutting string (8, 9) an angle of no more than approximately 30°.

4. String mowing head according to any of claims 1 to 3,
**characterised in that** the distance (o) of the lower edge (25, 55, 65) of the shielding element, which faces the underside (13) of the base body (10), from the plane (35) of the underside (13) of the base body (10) is less than the distance (p) of the section (16, 17) of the cutting string (8, 9) which is located adjacent to the shielding element.

5. String mowing head according to claim 4,
**characterised in that** the distance (c, k, m) of the shielding element from the long side (18, 19), which is leading in the direction of rotation (11), of the cutting string (8, 9) is no more than 5 times the difference (d, l, n) between the distance (o) of the section (16, 17) of the cutting string (8, 9) which is located adjacent to the shielding element from the plane (35) of the underside (13) and the distance (p) of the lower edge (25, 55, 65) of the shielding element from the plane (35) of the underside (13).

6. String mowing head according to any of claims 1 to 5,
**characterised in that** the roof surface (13) has at least one helical section (30, 31), which is located upstream of the shielding element and adjoins the shielding element, wherein the distance (e, f, g, h, i) of the roof surface (26) from the plane (35) of the underside (13) increases in the helical section (30, 31) in the direction of rotation (11).

7. String mowing head according to claim 6,
**characterised in that** the helical section (30, 31) extends across an angle range (α, β) about the axis of rotation (7) which is at least 30% of the angular distance (γ) between cutting strings (8, 9) which are adjacent to one another in the circumferential direction.

8. String mowing head according to any of claims 1 to 7,
**characterised in that** the shielding element is a shielding wall (20, 21, 50, 60).

9. String mowing head according to any of claims 1 to 8,
**characterised in that** the circumferential wall (27) which radially bounds the interior region (15) towards the outside relative to the axis of rotation (7) widens in at least one section towards the plane (35) of the underside (13) of the base body (10).

10. String mowing head according to claim 9,
**characterised in that** the cross-section of the interior region (15) is circular and the diameter (a, b) of the interior region (15) as measured perpendicular to the axis of rotation (7) increases in at least one section towards the plane (35) of the underside (13) of the base body (10).

11. String mowing head according to claim 10,
**characterised in that** the diameter (a) of the interior region (15) at the underside (13) of the base body (10) is at least approximately 120% of the diameter (b) of the interior region (15) at the lower edge (25, 55, 65) of the shielding element which faces the underside (13) of the base body (10).

12. String mowing head according to any of claims 1 to 11,
**characterised in that** the cutting string (8, 9) bears against a stop (32, 33) of the string mowing head (5) with its end (42, 43) extending into the interior region (15).

13. String mowing head according to any of claims 1 to 12,
**characterised in that** the cutting string (8, 9) is held on the base body (10) by a clamping device (36), which blocks a movement of the cutting string (8, 9) to the outside of the base body (10) and allows a movement of the cutting string (8, 9) towards the interior region (15).

## Revendications

1. Tête faucheuse à fil pour une débroussailleuse, la tête faucheuse à fil (5), en fonctionnement, étant apte à être entraînée en rotation dans un sens de rotation (11) autour d'un axe de rotation (7), la tête faucheuse à fil (5) comportant un corps de base (10) auquel est fixé au moins un fil de coupe (8, 9), le corps de base (10) comportant un côté inférieur (13) tourné vers le sol (12), en fonctionnement, le fil de coupe (8, 9), à partir d'un côté extérieur (14) du corps de base (10), traversant une ouverture (22, 23) jusque dans une zone intérieure (15) du corps de base (10) qui est ouverte vers le côté inférieur (13) dudit corps de base (10), un élément de protection étant prévu dans la zone intérieure (15), la partie (16, 17) du fil de coupe (8, 9) située dans la zone intérieure (15) étant disposée sur le côté abrité par l'élément de protection, par rapport au sens de rotation (11), la zone intérieure (15) étant limitée vers le côté opposé au côté intérieur (13) par une surface en forme de toit (26),
**caractérisée en ce que** l'élément de protection (20, 21, 50, 60) forme avec la surface en forme de toit (26) de la zone intérieure (15) un logement (44) pour le fil de coupe (8, 9) qui est au moins en partie ouvert vers le côté arrière, en fonctionnement.

2. Tête faucheuse à fil selon la revendication 1,
**caractérisée en ce que** l'élément de protection est disposé près du côté longitudinal (18, 19), situé à l'avant en fonctionnement, de la partie (16, 17) du fil de coupe (8, 9) située dans la zone intérieure (15).

3. Tête faucheuse à fil selon la revendication 1 ou 2,
**caractérisée en ce que** le bord inférieur (25, 55, 65), tourné vers le côté inférieur (13) du corps de base (10), de l'élément de protection définit avec le sens longitudinal (28, 29) du fil de coupe (8, 9) un angle d'environ 30° au maximum.

4. Tête faucheuse à fil selon l'une des revendications 1 à 3,
**caractérisée en ce que** l'écartement (o) du bord inférieur (25, 55, 65), tourné vers le côté inférieur (13) du corps de base (10), de l'élément de protection par rapport au plan (35) du côté inférieur (13) du corps de base (10) est plus petit que l'écartement (p) de la partie (16, 17), disposée près de l'élément de protection, du fil de coupe (8, 9).

5. Tête faucheuse à fil selon la revendication 4,
**caractérisée en ce que** l'écartement (c, k, m) de l'élément de protection par rapport au côté longitudinal (18, 19), situé à l'avant par rapport au sens de rotation (11), du fil de coupe (8, 9) est égal au maximum à 5 fois la différence (d, l, n) entre l'écartement (o) de la partie (16, 17), disposée près de l'élément de protection, du fil de coupe (8, 9) par rapport au plan (35) du côté inférieur (13), et l'écartement (p) du bord inférieur (25, 55, 65) de l'élément de protection par rapport au plan (35) du côté inférieur (13).

6. Tête faucheuse à fil selon l'une des revendications 1 à 5,
**caractérisée en ce que** la surface en forme de toit (13) présente au moins une partie hélicoïdale (30, 31) qui est disposée à l'avant de l'élément de protection et qui jouxte celui-ci, l'écartement (e, f, g, h, i) de la surface en forme de toit (26) par rapport au plan (35) du côté inférieur (13) augmentant dans la partie hélicoïdale (30, 31) dans le sens de rotation (11).

7. Tête faucheuse à fil selon la revendication 6,
**caractérisée en ce que** la partie hélicoïdale (30, 31) s'étend sur une zone angulaire (α, β), autour de l'axe de rotation (7), qui représente au moins 30% environ de l'écartement angulaire (γ) entre des fils de coupe (8, 9) voisins dans le sens circonférentiel.

8. Tête faucheuse à fil selon l'une des revendications 1 à 7,
**caractérisée en ce que** l'élément de protection est une paroi de protection (20, 21, 50, 60).

9. Tête faucheuse à fil selon l'une des revendications 1 à 8,
**caractérisée en ce que** la paroi circonférentielle (27) qui limite radialement vers l'extérieur la zone intérieure (15) par rapport à l'axe de rotation (7) s'élargit, dans au moins une partie, en direction du plan (35) du côté inférieur (13) du corps de base (10).

10. Tête faucheuse à fil selon la revendication 9,
**caractérisée en ce que** la section transversale de la zone inférieure (15) est circulaire, et le diamètre (a, b) de la zone intérieure (15), mesuré perpendiculairement à l'axe de rotation (7), augmente dans la ou les parties en direction du plan (35) du côté inférieur (13) du corps de base (10).

11. Tête faucheuse à fil selon la revendication 10,
**caractérisée en ce que** le diamètre (a) de la zone intérieure (15) sur le côté inférieur (13) du corps de base (10) représente au moins 120% environ du diamètre (b) de la zone intérieure (15) sur le bord inférieur (25, 55, 65), tourné vers le côté inférieur (13) du corps de base (10), de l'élément de protection.

12. Tête faucheuse à fil selon l'une des revendications 1 à 11,
**caractérisée en ce que** le fil de coupe (8, 9) est appliqué avec son extrémité (42, 43) qui dépasse dans la zone intérieure (15) contre une butée (32, 33) de la tête faucheuse à fil (5).

13. Tête faucheuse à fil selon l'une des revendications 1 à 12,
**caractérisée en ce que** le fil de coupe (8, 9) est fixé au corps de base (10) par un dispositif de serrage (36) qui bloque un mouvement du fil de coupe (8, 9) vers le côté extérieur (14) du corps de base (10) et autorise un mouvement du fil de coupe (8, 9) en direction de la zone intérieure (15).
